# FASCICULE DE BREVET EUROPEEN

(11) **EP 2 641 369 B1**
(45) Date de publication et mention de la délivrance du brevet: **25.07.2018**
(21) Numéro de dépôt: 11796746.3
(22) Date de dépôt: 15.11.2011
(51) Int. Cl.: H04L 25/03, H04W 24/02, H04L 25/02

(54) **PROCEDE DE COMMUNICATION DANS UN RESEAU COOPERATIF**
VERFAHREN ZUR KOMMUNIKATION IN EINEM KOOPERATIVEN NETZWERK
METHOD OF COMMUNICATION IN A COOPERATIVE NETWORK

(30) Priorité: 19.11.2010 FR 1059520
(43) Date de publication de la demande: 25.09.2013
(73) Titulaire: Orange, 75015 Paris (FR)
(72) Inventeur: PHAN HUY, Dinh Thuy, F-75004 Paris (FR); LEGOUABLE, Rodolphe, F-35510 Cesson Sevigne (FR)
(86) Numéro de dépôt international: PCT/FR2011/052644
(87) Numéro de publication internationale: WO 2012/066227

(56) Documents cités:
- BARTON R J ET AL: "Cooperative time-reversal communication in wireless sensor networks", STATISTICAL SIGNAL PROCESSING, 2005 IEEE/SP 13TH WORKSHOP ON BORDEAUX, FRANCE JULY 17-20 2005, PISCATAWAY, NJ, USA,IEEE, 17 juillet 2005 (2005-07-17), pages 1146-1151, XP010915074, DOI: 10.1109/SSP.2005.1628768 ISBN: 978-0-7803-9403-2 cité dans la demande
- RICHARD J BARTON ET AL: "Order-Optimal Data Aggregation in Wireless Sensor Networks Using Cooperative Time-Reversal Communication", INFORMATION SCIENCES AND SYSTEMS, 2006 40TH ANNUAL CONFERENCE ON, IEEE, PI, 1 mars 2006 (2006-03-01), pages 1050-1055, XP031011982, ISBN: 978-1-4244-0349-3

## Description

### Arrière-plan de l'invention

L'invention se rapporte au domaine général des télécommunications. L'invention se rapporte en particulier à un réseau radio coopératif.

Dans un réseau radio coopératif, plusieurs points d'accès coopèrent pour transmettre simultanément des données vers une cible par liaison sans fil. Les techniques utilisées, connues sous le nom de formation de faisceau coopérative ou « *coopérative beamforming »* en anglais, permettent d'augmenter le rapport signal sur bruit et interférence (SINR pour « *Signal to Interference and Noise Ratio* ») au niveau de la cible, et donc d'augmenter le débit de transmission.

Typiquement, la transmission de données est décomposée en plusieurs phases :
- dans une phase de relayage, un point d'accès source ayant des données à transmettre vers la cible transmet les données vers d'autres points d'accès du réseau, dans lesquels elles sont mémorisées ;
- dans une phase d'apprentissage, la cible émet une séquence d'apprentissage ; chaque point d'accès estime la réponse impulsionnelle du canal entre la cible et lui-même à partir de la séquence reçue et déformée par le canal, puis, chaque point d'accès détermine un filtre de pré-égalisation en fonction de la réponse impulsionnelle estimée (par exemple, le filtre de pré-égalisation est la réponse impulsionnelle retournée temporellement) ; et
- enfin, dans une phase de transmission, chaque point d'accès réémet les données en les pré-égalisant par son propre filtre déterminé pendant la phase d'apprentissage, de telle sorte que les émissions soient simultanées et synchrones.

L'intérêt d'une telle technique est qu'elle permet de profiter de la puissance de transmission de plusieurs points d'accès au lieu d'un seul. Soit Pmax la puissance maximale de transmission d'un point d'accès. La transmission simultanée de N points d'accès permet d'augmenter la puissance de transmission d'un facteur N par rapport à Pmax, et, associée aux filtres de pré-égalisation, elle permet d'augmenter la puissance reçue par la cible et le rapport signal sur bruit et interférence. Le document "Cooperative time-reversal communication in wireless sensor networks", Barton, R.J.; Ji Chen; Kyle Huang; Dagang Wu; Statistical Signal Processing, 2005 IEEE/SP 13th Workshop on Digital Object, Pages 1146 à 1151 (Publié en 2005), décrit un exemple de communication dans un réseau coopératif de ce type.

Le rapport signal sur bruit et interférence (SINR) à la cible, et donc le débit de transmission, sont d'autant plus grands que le nombre de points d'accès coopérants est grand. Toutefois, le nombre de points d'accès coopérants est limité par la puissance de transmission de la cible Pcible. En effet, seuls les points d'accès à la portée de la cible peuvent effectuer la phase d'apprentissage. Or la portée de la cible est limitée par sa puissance de transmission Pcible.

### Obiet et résumé de l'invention

L'invention propose un procédé de communication exécuté par un noeud d'un réseau de télécommunications coopératif, comprenant :
- une étape d'apprentissage incluant la détermination d'un filtre de pré-égalisation, dit filtre de transmission, en fonction d'un signal d'apprentissage reçu, et
- une étape de transmission de données vers une entité cible du réseau, en utilisant ledit filtre de transmission déterminé pendant l'étape d'apprentissage, de manière simultanée et synchrone avec d'autres noeuds dudit réseau.
L'étape d'apprentissage comprend :
- une étape d'écoute d'un premier signal d'apprentissage provenant de l'entité cible du réseau,
- une étape de vérification d'une réception correcte du premier signal d'apprentissage, et
- en réponse à la réception correcte du premier signal d'apprentissage :
   - une étape de détermination du filtre de transmission en fonction au moins du premier signal d'apprentissage, et
   - une étape d'émission d'un deuxième signal d'apprentissage pré-égalisé par un filtre de pré-égalisation, dit filtre focalisant, déterminé en fonction du premier signal d'apprentissage, ou
- en l'absence de réception correcte du premier signal d'apprentissage, une étape d'écoute d'un deuxième signal d'apprentissage et, en réponse à la réception correcte dudit deuxième signal d'apprentissage, une étape de détermination du filtre de transmission en fonction au moins du deuxième signal d'apprentissage.

Corrélativement, l'invention propose un noeud de communication destiné à un réseau de télécommunications coopératif, comprenant :
- des moyens d'apprentissage aptes à déterminer un filtre de pré-égalisation, dit filtre de transmission, en fonction d'un signal d'apprentissage reçu, et
- des moyens de transmission de données vers une entité cible du réseau, en utilisant ledit filtre de transmission déterminé par les moyens d'apprentissage.
Les moyens d'apprentissage comprennent :
- des moyens d'écoute d'un premier signal d'apprentissage provenant de l'entité cible du réseau,
- des moyens de vérification d'une réception correcte du premier signal d'apprentissage,
- des moyens de détermination du filtre de transmission en fonction au moins du premier signal d'apprentissage, et des moyens d'émission d'un deuxième signal d'apprentissage pré-égalisé par un filtre de pré-égalisation, dit filtre focalisant, déterminé en fonction du premier signal d'apprentissage, activés en réponse à la réception correcte du premier signal d'apprentissage, et
- des moyens d'écoute d'un deuxième signal d'apprentissage et des moyens de détermination du filtre de transmission en fonction au moins du deuxième signal d'apprentissage, activés en l'absence de réception correcte du premier signal d'apprentissage et en réponse à la réception correcte dudit deuxième signal d'apprentissage.

De manière correspondante, l'invention propose un réseau de télécommunications coopératif comprenant une entité cible et une pluralité de noeuds de communication conformes à l'invention, dans lequel les moyens de transmission de données des noeuds de communication sont aptes à transmettre des données vers l'entité cible de manière simultanée et synchrone.

Grâce à ces caractéristiques, l'entité cible peut recevoir des données provenant non seulement de noeuds à sa portée et ayant reçu le premier signal d'apprentissage, mais également de noeuds qui ne sont pas à sa portée mais qui ont reçu le deuxième signal d'apprentissage. Le nombre de noeuds coopérant pour transmettre les données est donc plus élevé. Ainsi, la puissance et le SINR du signal reçu par l'entité cible sont plus élevés, ce qui permet un débit de transmission plus important.

Le procédé de communication peut comprendre, en réponse à la réception correcte du premier signal d'apprentissage, une étape d'envoi d'un message d'information vers une entité de gestion.

Ainsi, l'entité de gestion sait quels noeuds ont reçu correctement le premier signal d'apprentissage. Dans une variante, l'entité de gestion utilise cette information pour donner instruction d'émettre le deuxième signal d'apprentissage. De manière générale, l'entité de gestion peut utiliser cette information pour donner instruction de transmettre des données vers l'entité cible.

Dans la variante dans laquelle l'entité de gestion utilise cette information pour donner instruction d'émettre le deuxième signal d'apprentissage, le message d'information indique une estimation d'une puissance pouvant être atteinte à l'entité cible, l'étape d'émission d'un deuxième signal d'apprentissage étant effectuée en réponse à la réception d'un message d'instruction de l'entité de gestion.

Corrélativement, selon un mode de réalisation, le réseau de télécommunications comprend une entité de gestion, et les noeuds de communication comprennent :
- des moyens d'estimation d'une puissance pouvant être atteinte à l'entité cible et des moyens d'envoi d'un message contenant ladite puissance vers l'entité de gestion, activés en réponse à la réception correcte du premier signal d'apprentissage, et
- des moyens d'émission d'un deuxième signal d'apprentissage, activés en réponse à la réception d'un message d'instruction de l'entité de gestion,
l'entité de gestion comprenant :
- des moyens de réception desdits messages contenant des puissances pouvant être atteintes à l'entité cible, émis par un groupe de noeuds de communication ayant correctement reçu le premier signal d'apprentissage,
- des moyens de test d'une condition d'élargissement en fonction desdites puissances, et
- des moyens d'envoi de messages d'instruction vers les noeuds de communication dudit groupe, activés lorsque ladite condition d'élargissement est vérifiée.

De manière correspondante, l'invention propose une entité de gestion pour réseau de télécommunications. Cette entité de gestion comprend :
- des moyens de réception de messages contenant des puissances pouvant être atteintes à l'entité cible, émis par un groupe de noeuds de communication ayant correctement reçu un premier signal d'apprentissage,
- des moyens de test d'une condition d'élargissement en fonction desdites puissances, et
- des moyens d'envoi de messages d'instruction vers les noeuds de communication dudit groupe, activés lorsque ladite condition d'élargissement est vérifiée.

Corrélativement, l'invention propose un procédé de gestion effectué par une entité de gestion d'un réseau de télécommunications. Ce procédé comprend :
- une étape de réception de messages contenant des puissances pouvant être transmises à une entité cible, émis par un groupe de noeuds de communication ayant correctement reçu un premier signal d'apprentissage,
- une étape de test d'une condition d'élargissement en fonction desdites puissances, et
- lorsque ladite condition d'élargissement est vérifiée, une étape d'envoi de messages d'instruction vers les noeuds de communication dudit groupe.

Ainsi, s'il n'est pas possible d'atteindre des noeuds supplémentaires que ceux à portée de l'entité cible, par exemple en raison d'une disposition particulière des noeuds, le test de la condition d'élargissement permet d'économiser l'énergie nécessaire à l'émission du deuxième signal d'apprentissage.

Selon un mode de réalisation, dans le réseau de télécommunications :
- les noeuds de communication comprennent des moyens d'émission d'un deuxième signal d'apprentissage, activés en réponse à la réception correcte du premier signal d'apprentissage, et
- l'entité cible comprend des moyens d'émission d'un deuxième signal d'apprentissage, aptes à envoyer ledit deuxième signal d'apprentissage de manière simultanée et synchrone aux noeuds de communication.

Corrélativement, l'invention propose une entité cible pour réseau de télécommunications, comprenant :
- des moyens d'émission d'un premier signal d'apprentissage vers des noeuds de communication, et
- des moyens de réception de données transmises par un groupe de noeuds de communication. Cette entité cible comprend :
   - des moyens d'émission d'un deuxième signal d'apprentissage, aptes à envoyer ledit deuxième signal d'apprentissage de manière simultanée et synchrone à un groupe de noeuds de communication.

De manière correspondante, l'invention propose un procédé de communication effectué par une entité cible d'un réseau de télécommunications, comprenant :
- une étape d'émission d'un premier signal d'apprentissage vers des noeuds de communication, et
- une étape de réception de données transmises par un groupe de noeuds de communication.
Ce procédé comprend :
- une étape d'émission d'un deuxième signal d'apprentissage de manière simultanée et synchrone à un groupe de noeuds de communication.

Dans ce cas, l'entité cible et les noeuds qui sont à sa portée coopèrent pour l'émission du deuxième signal d'apprentissage. La portée du deuxième signal d'apprentissage est donc nécessairement supérieure à la portée de l'entité cible seule. Il est donc normalement possible d'atteindre des noeuds supplémentaires et donc d'améliorer le débit de transmission.

Selon un mode de réalisation, le réseau de télécommunications comprend en outre au moins un terminal, et :
- les noeuds de communication comprennent des moyens d'émission d'un signal d'apprentissage intermédiaire, activés en réponse à la réception correcte du premier signal d'apprentissage,
- le terminal comprend des moyens d'écoute du signal d'apprentissage intermédiaire et des moyens d'émission d'un deuxième signal d'apprentissage.

Corrélativement, l'invention propose un terminal pour réseau de télécommunications, ce terminal comprenant des moyens d'écoute d'un signal d'apprentissage intermédiaire et des moyens d'émission d'un deuxième signal d'apprentissage.

Dans ce cas, le deuxième signal d'apprentissage n'est pas transmis entre différents noeuds effectuant la phase d'apprentissage. Il n'est donc pas nécessaire d'utiliser un format de trame incluant une phase destinée à la communication entre noeuds. Au contraire, un format de trame classique pour transmission de type duplex par division temporelle (TDD pour « *Time-Division Duplexing »*) peut être utilisé. Une telle trame comprend une phase de transmission montante (de l'entité cible aux noeuds) et une phase de transmission descendante (des noeuds vers l'entité cible), mais pas de phase destinée à la transmission entre noeuds.

L'invention vise aussi un programme d'ordinateur comportant des instructions pour l'exécution des étapes d'un procédé de communication conforme à l'invention lorsque ledit programme est exécuté par un ordinateur. De même, l'invention vise un programme d'ordinateur comportant des instructions pour l'exécution des étapes d'un procédé de gestion conforme à l'invention lorsque ledit programme est exécuté par un ordinateur.

Chacun de ces programmes peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus.

Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue schématique d'un réseau selon un mode de réalisation de l'invention,
- la figure 2 représente un dispositif de communication du réseau de la figure 1,
- la figure 3 représente un format de trame utilisé par les noeuds du réseau de la figure 1,
- la figure 4 est un diagramme qui illustre le déroulement d'une communication dans le réseau de la figure 1,
- la figure 5 est un diagramme qui illustre le déroulement d'une communication dans le réseau de la figure 1, selon une variante,
- la figure 6 est une vue schématique d'un réseau selon un autre mode de réalisation de l'invention,
- la figure 7 représente un format de trame utilisé par les noeuds du réseau de la figure 6, et
- la figure 8 est un diagramme qui illustre le déroulement d'une communication dans le réseau de la figure 6.

### Description détaillée de modes de réalisation

L'invention est décrite ci-dessous dans le cadre d'un réseau coopératif composé de noeuds et d'une entité cible, dans lequel les noeuds peuvent coopérer pour transmettre des données vers l'entité cible. Il peut s'agir par exemple d'un réseau d'accès mobile ou fixe, dans lequel les noeuds sont des points d'accès et la cible est un équipement de télécommunications, ou d'un réseau de capteurs, dans lequel les noeuds sont des capteurs et l'entité cible collecte les données provenant des capteurs.

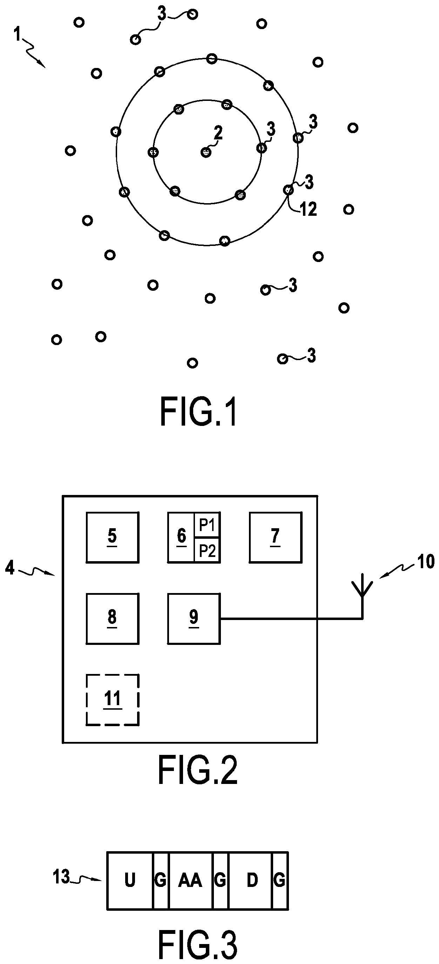

La **figure 1** représente un réseau coopératif 1 incluant une entité cible 2 et des noeuds 3. Par souci de clarté, la référence 3 n'est pas reproduite pour chacun des noeuds sur la figure 1. Les noeuds 3 et l'entité cible 2 sont synchronisés, c'est-à-dire qu'ils partagent une connaissance commune du temps T.

La **figure 2** représente un dispositif de communication 4 qui peut être l'entité cible 2 ou l'un des noeuds 3. Le dispositif de communication 4 présente l'architecture matérielle d'un ordinateur et comprend un processeur 5, une mémoire morte 6, une mémoire vive 7, éventuellement une mémoire non volatile 8, une interface de communication 9 et une antenne 10.

Le processeur 5 permet d'exécuter des programmes d'ordinateurs mémorisés dans la mémoire morte 6, en utilisant la mémoire vive 7. La mémoire vive 7 et la mémoire non volatile 8 permettent de mémoriser des données.

L'interface de communication 9 et l'antenne 10 permettent d'effectuer une communication sans fil dans le réseau 1. En outre, dans le cas d'un noeud 3, le dispositif de communication 4 comprend une interface 11 qui permet une communication par liaison filaire avec les autres noeuds 3 du réseau 1.

Dans le réseau 1 de la figure 1, plusieurs noeuds 3 peuvent coopérer pour transmettre des données à l'entité cible 2, par liaison sans fil. A cet effet, chaque noeud 3 met en oeuvre un procédé de communication décrit ultérieurement. Ce procédé de communication est mis en oeuvre en exécutant un programme d'ordinateur P1, mémorisé dans la mémoire morte 6, comprenant des instructions pour la mise en oeuvre du procédé de communication.

En outre, un équipement du réseau, appelé entité de gestion 12, met un oeuvre un procédé de gestion de la transmission de données, décrit ultérieurement. Dans l'exemple de la figure 1, l'entité de gestion 12 est un des noeuds 3. Ce procédé de gestion est mis en oeuvre en exécutant un programme d'ordinateur P2, mémorisé dans la mémoire morte 6 d'au moins un noeud 3, comprenant des instructions pour la mise en oeuvre du procédé de gestion. Dans une variante, l'entité de gestion 12 est un dispositif de communication distinct des noeuds 3. Ci-après, lorsqu'on mentionne une communication entre l'entité de gestion 12 et un noeud 3, il peut donc s'agir d'une télécommunication par liaison filaire entre l'entité de gestion 12 et un noeud 3 distinct, ou d'une communication interne au noeud 3 qui joue le rôle d'entité de gestion 12.

La **figure 3** représente le format d'une trame 13 utilisée pour communiquer dans le réseau 1 par liaison sans fil. La transmission dans le réseau 1 est une transmission de type duplex par division temporelle (TDD pour « *Time-Division Duplexing* »). Ainsi, la trame 13 comprend une phase U de transmission montante (de l'entité cible 2 aux noeuds 3) et une phase D de transmission descendante (des noeuds 3 vers l'entité cible 2). Par ailleurs, la trame 13 comprend également, une phase AA de transmission entre noeuds 3. Les phases U, AA et D sont séparées par des temps de garde G.

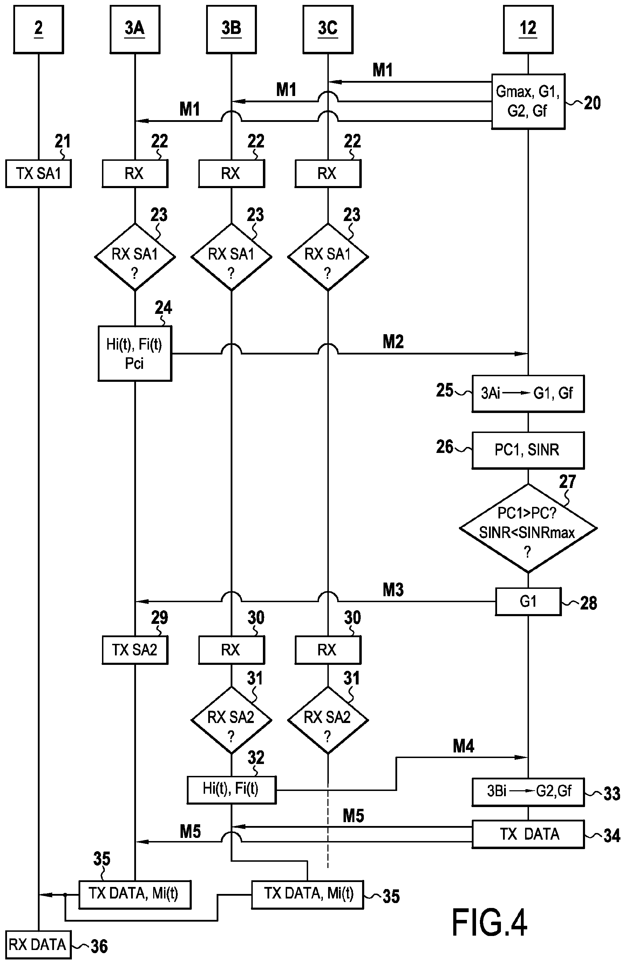

Le procédé de communication et le procédé gestion précités sont maintenant décrits en référence à la **figure 1****.** Chaque noeud 3 exécute le même programme P1. Toutefois, en fonctions des signaux reçus, les noeuds 3 se comportent différemment l'un de l'autre. Ainsi, sur la figure 4, on a représenté un noeud 3A proche de l'entité cible 2, un noeud 3B situé à distance intermédiaire de l'entité cible 2, et un noeud 3C éloigné de l'entité cible 2. Ci-après, on utilise les indices i, j pour désigner un noeud 3, 3A, 3B, 3C particulier. Sur la figure 1, deux cercles centrés sur l'entité cible 2 montrent les positions des noeuds 3A et 3B.

A l'étape 20, l'entité de gestion 12 définit un groupe Gmax de noeuds 3 et informe les noeuds 3 qu'ils font partie de Gmax par des messages M1. Les messages M1 sont transmis par liaison filaire par les interfaces 11 (et éventuellement de manière interne au noeud 3i qui joue le rôle d'entité de gestion 12). L'entité de gestion 12 initialise également des groupes G1, G2 et Gf à des ensembles vides. Le groupe G1 est destiné à inclure les noeuds 3 à proximité de l'entité cible 2, le groupe G2 est destiné à inclure les noeuds 3 à distance intermédiaire de l'entité cible 2, et le groupe Gf est destiné à inclure les noeuds 3 de G1 et G2.

Ensuite, à l'étape 21, l'entité cible 2 émet, par liaison sans fil, un signal d'apprentissage SA1 incluant une séquence d'apprentissage (également notée SA1). Simultanément, chaque noeud 3i du groupe Gmax écoute, à l'étape 22, le signal d'apprentissage SA1. L'émission du signal d'apprentissage SA1 correspond à la phase U de la trame 13.

Puis, à l'étape 23, chaque noeud 3i du groupe Gmax vérifie s'il a correctement reçu le signal d'apprentissage SA1. Par exemple, chaque noeud 3i détermine le rapport signal sur bruit et interférence (ci-après noté SINR) du signal reçu et le compare à un seuil de réception S prédéterminé.

En effet, la puissance d'émission maximale de l'entité cible 2, noté PC, limite la portée de l'entité cible 2. Ainsi, seuls les noeuds 3A situés à proximité de l'entité cible 2 reçoivent correctement la séquence d'apprentissage SA1 et effectuent l'étape 24 décrite ci-après. Les noeuds 3B et 3C, plus éloignés, ne reçoivent pas correctement la séquence d'apprentissage SA1. Suite à l'étape 23, ils n'effectuent donc pas l'étape 24 et attendent avant d'effectuer l'étape 30 décrite ci-après.

A l'étape 24, chaque noeud 3Ai estime la réponse impulsionnelle Hi(t) du canal de transmission entre l'entité cible 2 et lui-même, en fonction de la séquence d'apprentissage SA1 reçue et déformée par le canal. Chaque noeud 3Ai calcule un filtre de pré-égalisation, dit filtre « focalisant », Fi(t) en fonction de sa réponse impulsionnelle Hi(t). L'homme du métier connaît des méthodes de détermination de la réponse impulsionnelle Hi(t) et du filtre focalisant Fi(t). Par exemple, le filtre focalisant Fi(t) est donné par le retournement temporel de la réponse impulsionnelle Hi(t) : Fi(t) = Hi(-t)*.

Le noeud 3Ai estime aussi la puissance Pci qu'il estime pouvoir fournir au point focal de l'entité cible 2, en fonction de la réponse impulsionnelle Hi(t). Enfin, le noeud 3Ai envoie un message M2 à l'entité de gestion 12 pour indiquer qu'il a correctement reçu la séquence d'apprentissage SA1 et pour informer l'entité de gestion 12 de la puissance Pci.

En réponse à la réception de messages M2 de chaque noeud 3Ai, l'entité de gestion 12 ajoute, à l'étape 25, chaque noeud 3Ai dans les groupes G1 et Gf. Puis, à l'étape 26, l'entité de gestion 12 estime la puissance PC1 et le SINR qui seraient reçus par l'entité cible 2 si les noeuds 3 du groupe Gf (c'est-à-dire les noeuds 3A) transmettaient une séquence d'apprentissage SA2 pré-égalisée par leurs filtres focalisants Fi(t) respectifs, de manière synchrone et simultanée.

Ensuite, à l'étape 27, l'entité de gestion 12 compare la puissance PC1 avec la puissance d'émission maximale PC de l'entité cible, et le SINR avec un seuil SINRmax. Si PC1 > PC et SINR < SINRmax, cela signifie que la transmission, par les noeuds 3Ai du groupe Gf, de la séquence d'apprentissage SA2 pré-égalisée par leurs filtres focalisants Fi(t) respectifs, de manière synchrone et simultanée, correspond à une transmission issue de l'entité cible 2 mais de plus grande portée que la portée de l'entité cible 2.

Dans ce cas, à l'étape 28, l'entité de gestion 12 envoie un message M3 vers chaque noeud 3Ai du groupe G1, lui indiquant d'effectuer l'étape 29. En réponse à la réception du message M3, chaque noeud 3Ai émet, par liaison sans fil, un signal d'apprentissage SA2 pré-égalisé par son filtre focalisant Fi(t), incluant une séquence d'apprentissage (également notée SA2). Simultanément, chaque noeud 3i du groupe Gmax moins G1, c'est-à-dire les noeuds 3B et 3C, écoute, à l'étape 30, le signal d'apprentissage SA2. L'émission et l'écoute du signal d'apprentissage SA2 correspondent à la phase AA de la trame 13.

Puis, à l'étape 31, chaque noeud 3Bi et 3Ci vérifie s'il a correctement reçu le signal d'apprentissage SA2. Par exemple, chaque noeud 3Bi et 3Ci détermine le SINR du signal reçu et le compare à un seuil de réception S prédéterminé.

Le test de l'étape 27 étant vérifié, la portée d'émission du signal d'apprentissage SA2 est plus grande que la portée de transmission du signal d'apprentissage SA1. Ainsi, les noeuds 3B situés à distance intermédiaire de l'entité cible 2 déterminent qu'ils ont correctement reçu la séquence d'apprentissage SA2 et effectuent l'étape 32. Par contre, les noeuds 3C plus éloignés de l'entité cible 2 déterminent qu'ils n'ont pas correctement reçu la séquence d'apprentissage SA2 et ne participent plus à la suite de la communication.

A l'étape 32, chaque noeud 3Bi estime la réponse impulsionnelle Hi(t) du canal de transmission entre l'entité cible 2 et lui-même, en fonction de la séquence d'apprentissage SA2 reçue et déformée par le canal. Chaque noeud 3Bi calcule également un filtre focalisant Fi(t) en fonction de sa réponse impulsionnelle Hi(t). Le noeud 3Bi envoie également un message M4 à l'entité de gestion 12 pour indiquer qu'il a correctement reçu la séquence d'apprentissage SA2.

En réponse à la réception des messages M4 de chaque noeud 3Bi, l'entité de gestion 12 ajoute, à l'étape 33, chaque noeud 3Bi dans les groupes G2 et Gf. Puis, à l'étape 34, l'entité de gestion 12 envoie un message M5 incluant des données à transmettre vers chaque noeud 3i du groupe Gf, c'est-à-dire vers les noeuds 3A et 3B mais pas vers les noeuds 3C.

A l'étape 35, en réponse à la réception du message M5, chaque noeud 3Ai et 3Bi détermine un filtre de pré-égalisation, dit filtre « de transmission », Mi(t). Le filtre de transmission Mi(t) peut être le filtre focalisant Fi(t) précédemment déterminé ou un autre filtre déterminé en fonction de la réponse impulsionnelle Hi(t). Dans une variante, le filtre de transmission Mi(t) d'un noeud 3i est déterminé en fonction de la réponse impulsionnelle Hi(t) du noeud 3i lui-même et des réponses impulsionnelles Hj(t) des autres noeuds 3j.

Puis, chaque noeud 3Ai et 3Bi transmet les données reçues dans le message M5 en les pré-égalisant avec le filtre de transmission Mi(t), de manière simultanée et synchrone. L'émission des données correspond à la phase D de la trame 13.

Ainsi, l'entité cible 2 reçoit, à l'étape 36, les données du message M5 dans un signal de transmission généré non seulement par les noeuds 3A qui sont à sa portée, mais également par des noeuds 3B qui ne sont pas à sa portée. La puissance et le SINR du signal reçu sont donc plus élevés, ce qui permet un débit de transmission plus élevé.

Le procédé de communication mis en oeuvre par un noeud 3 comprend les étapes 22, 23, 24, 29, 30, 31, 32 et 35. Ce procédé de communication comprend une étape d'apprentissage au sens de l'invention, incluant les étapes 22, 23 et 24 dans le cas d'un noeud 3A et les étapes 22, 23, 30 et 32 dans le cas d'un noeud 3B. Le procédé de gestion mis en oeuvre par l'entité de gestion 12 comprend les étapes 20, 25, 26, 27, 28, 33 et 34.

Si le test de l'étape 27 n'est vérifié, cela signifie que la portée d'émission du signal d'apprentissage SA2 par les noeuds 3A ne serait pas plus grande que la portée de transmission du signal d'apprentissage SA1 par l'entité cible 2. Autrement dit, il n'est pas possible d'atteindre des noeuds 3 supplémentaires. Dans ce cas, après l'étape 27, l'entité de gestion 12 n'effectue pas l'étape 28. Les noeuds 3A ne reçoivent pas le message M3 et n'effectuent donc pas non plus l'étape 29. Ensuite, aux étapes 35 et 36, seuls les noeuds 3A participent à la transmission de données. Ainsi, s'il n'est pas possible d'atteindre des noeuds 3 autres que ceux à portée de l'entité cible 2, par exemple en raison d'une disposition particulière des noeuds 3, l'étape 27 permet d'économiser l'énergie nécessaire à l'émission du signal d'apprentissage SA2.

L'invention à été décrite précédemment en rapport à un mode de réalisation particulier. On décrit maintenant plusieurs variantes de réalisation, en utilisant les mêmes références pour désigner des éléments identiques ou similaires. Ces variantes peuvent être combinées.

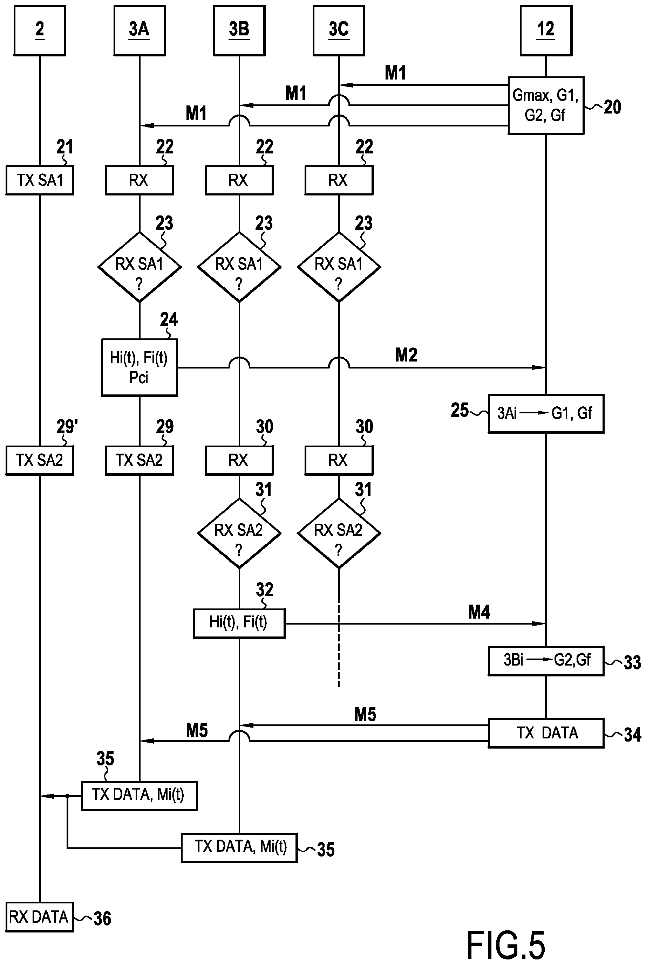

La **figure 5** représente une variante dans laquelle l'entité cible 2 participe à l'émission du signal d'apprentissage SA2, au cours d'une étape 29', simultanément et de manière synchronisée à l'émission du signal SA2 par les noeuds 3A à l'étape 29. Dans ce cas, le message M2 envoyé à l'entité de gestion 12 indique que le noeud 3Ai a reçu correctement la séquence d'apprentissage SA1, mais ne doit pas indiquer la puissance Pci. Par ailleurs, les étapes 26, 27 et 28 sont supprimées et les noeuds 3A effectuent systématiquement l'étape 29 sans attendre la réception d'un message M3. En effet, comme l'entité cible 2 et les noeuds 3A coopèrent pour l'émission du signal d'apprentissage SA2, la portée du signal d'apprentissage SA2 est nécessairement supérieure à la portée de l'entité cible 2 seule. Il est donc normalement possible d'atteindre des noeuds 3 supplémentaires et l'étape 27 n'est pas nécessaire.

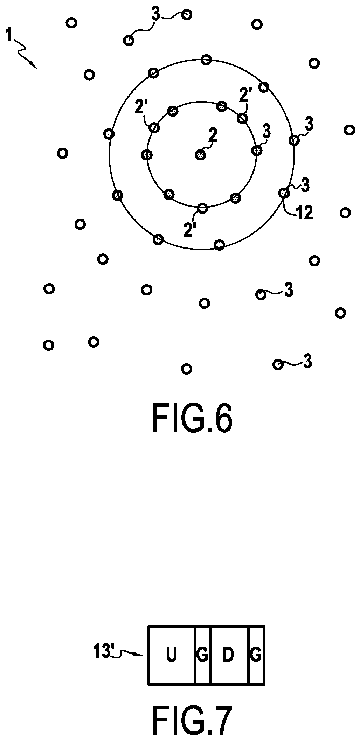

En référence aux figures 6 à 8, on décrit un mode de réalisation dans lequel l'apprentissage implique des terminaux 2' du réseau 1. Ainsi, la **figure 6** représente le réseau 1 dans lequel se trouvent plusieurs terminaux 2'. Les terminaux 2' peuvent présenter la structure matérielle du dispositif de communication 4 de la figure 2. Dans le cas d'un réseau d'accès, les terminaux 2' sont par exemple des équipements de télécommunication similaires à l'entité cible 2. La **figure 7** représente le format d'une trame 13' utilisée pour communiquer par liaison sans fil dans le réseau 1 de la figure 6. Par rapport à la trame 13 de la figure 3, la trame 13' comprend, elle aussi, une phase U de transmission montante et une phase D de transmission descendante séparées par des temps de garde G, mais pas de phase AA de transmission entre noeuds 3.

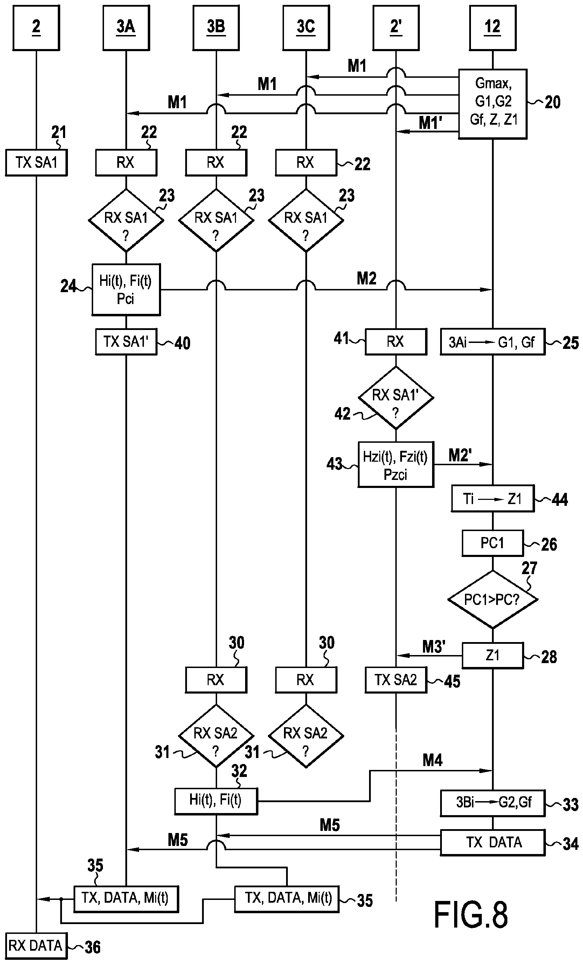

La **figure 8** illustre le déroulement d'une communication dans le réseau 1 de la figure 6. On décrit ci-après plus précisément les étapes qui diffèrent de celles décrites en référence à la figure 4.

A l'étape 20, l'entité de gestion 12 définit un groupe Gmax de noeuds 3 et informe les noeuds 3 qu'ils font partie de Gmax par des messages M1. L'entité de gestion 12 initialise également des groupes G1, G2 et Gf à des ensembles vides. De plus, l'entité de gestion définit un groupe Z de terminaux 2' et informe les terminaux 2' qu'ils font partie de Z par des messages M1'. L'entité de gestion 12 initialise également un groupe Z1 à un ensemble vide.

La communication se poursuit par des étapes 21 à 25 identiques à celles décrites en référence à la figure 4

Après l'étape 24, chaque noeud 3Ai émet par liaison sans fil, à l'étape 40, un signal d'apprentissage SA1' pré-égalisé par son filtre focalisant Fi(t), incluant une séquence d'apprentissage (également notée SA1'), pré-égalisé par le filtre focalisant Fi(t) déterminé à l'étape 24. Simultanément, chaque terminal 2' du groupe Z écoute, à l'étape 41, le signal d'apprentissage SA1'. L'émission du signal d'apprentissage SA1' correspond à la phase D de la trame 13'.

Puis, à l'étape 42, chaque terminal 2' du groupe Z vérifie s'il a correctement reçu le signal d'apprentissage SA1'. Les terminaux 2' qui n'ont pas correctement reçu le signal d'apprentissage SA1' ne participent plus à la suite de la communication. Les terminaux 2' qui ont correctement reçu le signal d'apprentissage SA1' participent à la suite de la communication selon les étapes 43 et 45 décrites ci-après.

A l'étape 43, chaque terminal 2' estime la réponse impulsionnelle Hzi(t) du canal de transmission entre l'entité cible 2 et lui-même, en fonction de la séquence d'apprentissage SA1' reçue et déformée par le canal. Chaque terminal 2' calcule un filtre de pré-égalisation focalisant Fzi(t) en fonction de sa réponse impulsionnelle Hzi(t). Le terminal 2' estime aussi la puissance Pzci qu'il estime pouvoir fournir au point focal de l'entité cible 2, en fonction de la réponse impulsionnelle Hzi(t). Enfin, le terminal 2' envoie un message M2' à l'entité de gestion 12 pour indiquer qu'il a correctement reçu la séquence d'apprentissage SA1' et pour informer l'entité de gestion 12 de la puissance Pzci.

En réponse à la réception de messages M2' des différents terminaux 2i', l'entité de gestion 12 ajoute, à l'étape 44, les terminaux 2i' dans le groupe Z1. Puis, à l'étape 26, l'entité de gestion 12 estime la puissance PC1 qui serait reçue par l'entité cible 2 si terminaux 2' du groupe Z1 transmettaient une séquence d'apprentissage SA2 pré-égalisée par leurs filtres focalisants Fzi(t) respectifs, de manière synchrone et simultanée.

Ensuite, à l'étape 27, l'entité de gestion 12 compare la puissance PC1 avec la puissance d'émission maximale PC de l'entité cible. Si PC1 > PC, cela signifie que la transmission, par les terminaux 2' du groupe Z1, de la séquence d'apprentissage SA2 pré-égalisée par leurs filtres focalisants Fzi(t) respectifs, de manière synchrone et simultanée, correspond à une transmission issue de l'entité cible 2 mais de plus grande portée que la portée de l'entité cible 2.

Dans ce cas, à l'étape 28, l'entité de gestion 12 envoie un message M3' vers chaque terminal 2' du groupe Z1, lui indiquant d'effectuer l'étape 45. En réponse à la réception du message M3', le terminal 2' émet, par liaison sans fil, un signal d'apprentissage SA2 incluant une séquence d'apprentissage (également notée SA2). Simultanément, chaque noeud 3 du groupe Gmax moins G1, c'est-à-dire les noeuds 3B et 3C, écoute, à l'étape 30, le signal d'apprentissage SA2. L'émission du signal d'apprentissage SA2 correspond à la phase U de la trame 13'.

La communication se poursuit par des étapes 31 à 36 identiques ou similaires à celles décrites en références à la figure 4.

Dans le mode de réalisation décrit en référence aux figures 6 à 8, le signal d'apprentissage SA2 qui permet l'élargissement du nombre de noeuds coopérants est émis par des terminaux 2', et non par les noeuds 3A comme dans le cas de la figure 4 (étape 29). Ce mode de réalisation permet donc d'utiliser un format de trame TDD classique, c'est-à-dire sans phase AA de transmission entre noeuds 3.

Dans une variante, non représentée, l'entité cible 2 émet le signal SA2 simultanément aux terminaux 2'. Dans ce cas, de manière similaire à la figure 5, le message M2 ne doit pas indiquer la puissance Pci, le message M2' ne doit pas indiquer la puissance Pzci, et les étapes 26 et 27 peuvent être omises.

On a décrit précédemment l'émission d'un premier signal d'apprentissage puis d'un deuxième signal d'apprentissage, ce qui permet une transmission de données vers l'entité cible 2 par les noeuds 3A qui sont à sa portée, mais également par des noeuds 3B qui ne sont pas à sa portée. Le même principe peut être mis en oeuvre de manière itérative, c'est-à-dire que les noeuds 3A et 3B peuvent émettre un signal d'apprentissage SA3 permettant à des noeuds 3 encore plus éloignés de l'entité cible 2 de participer à la transmission de données.

On a décrit précédemment un dispositif de communication 4 correspondant à un noeud 3 et comprenant une interface 11 qui permet une communication par liaison filaire avec l'entité de gestion 12. Dans une variante, la communication entre l'entité de gestion 12 et les noeuds 3 est une communication sans fil (sauf pour l'éventuel noeud 3 qui joue le rôle d'entité de gestion 12). Dans ce cas, le groupe Gmax ne peut pas être défini arbitrairement parmi tous les noeuds 3 du réseau 1. Au contraire, l'entité de gestion 12 définit un groupe Gmax de noeuds 3 à sa portée, par exemple en émettant un signal balise et en écoutant les réponses des noeuds 3 qui ont correctement reçu le signal balise. Les noeuds 3 qui coopèrent pour transmettre des données vers l'entité cible 2 sont alors les noeuds 3 situés à portée dans l'entité de gestion 12 et à « portée élargie » de l'entité cible 2. Par « portée élargie » de l'entité cible 2, on entend la portée du signal d'apprentissage SA2.

On a décrit précédemment un dispositif de communication 4 comprenant une antenne 10 et correspondant à un noeud 3 du réseau 1 ou à l'entité cible 2. Dans une variante, le dispositif de communication 4 correspondant à l'entité cible 2 comprenant N antennes (N>1) et le dispositif de communication 4 correspondant à un noeud 3i comprenant mi antennes (mi>1). Dans ce cas, la réponse impulsionnelle Hi(t), de taille NXmi, est une matrice de réponses impulsionnelles du canal MIMO (pour « *Multiple Inputs-Multiple Outputs »*)*.*

On a décrit précédemment un dispositif de communication 4 comprenant une antenne 10 et correspondant à un noeud 3 du réseau 1. Dans une variante, le dispositif de communication 4 comprend plusieurs antennes directives 10 et peut donc transmettre suivant plusieurs lobes. Dans ce cas, chaque lobe d'un dispositif de communication 4 correspond à un noeud 3 respectif. Ainsi, le procédé de communication décrit précédemment est mis en oeuvre indépendamment pour chaque lobe du dispositif de communication 4. Les noeuds 3 qui transmettent les données vers l'entité cible 2 correspondent alors aux lobes pointant vers l'entité cible 2, ce qui permet une utilisation efficace de la puissance de transmission.

En référence à la figure 4, on a décrit la transmission de données identiques vers les noeuds 3 (étape 34, messages M5) et des noeuds 3 vers l'entité cible 2 (étape 35 et 36). Les données peuvent cependant, d'un noeud 3 à l'autre, être différentes ou codées différemment.

## Revendications

1. Procédé de communication exécuté par un noeud (3) d'un réseau (1) de télécommunications coopératif, comprenant :
- une étape d'apprentissage incluant la détermination d'un filtre de pré-égalisation (Mi(t)), dit filtre de transmission, en fonction d'un signal d'apprentissage (SA1, SA2) reçu, et
- une étape (35) de transmission de données vers une entité cible (2) du réseau, en utilisant ledit filtre de transmission (Mi(t)) déterminé pendant l'étape d'apprentissage, de manière simultanée et synchrone avec d'autres noeuds dudit réseau,
**caractérisé en ce que** l'étape d'apprentissage comprend :
- une étape (22) d'écoute d'un premier signal d'apprentissage (SA1) provenant de l'entité cible (2) du réseau,
- une étape (23) de vérification d'une réception correcte du premier signal d'apprentissage (SA1), et
- en réponse à la réception correcte du premier signal d'apprentissage (SA1) :
- une étape (35) de détermination du filtre de transmission (Mi(t)) en fonction au moins du premier signal d'apprentissage (SA1), et
- une étape (29, 40) d'émission d'un signal d'apprentissage intermédiaire (SA1') ou d'un deuxième signal d'apprentissage (SA2) pré-égalisés par un filtre de pré-égalisation (Fi(t)), dit filtre focalisant, déterminé (24) en fonction du premier signal d'apprentissage (SA1),
ou
- en l'absence de réception correcte du premier signal d'apprentissage (SA1), une étape (30) d'écoute dudit deuxième signal d'apprentissage (SA2) et, en réponse à la réception correcte (31) dudit deuxième signal d'apprentissage (SA2), une étape (32, 35) de détermination du filtre de transmission (Mi(t)) en fonction au moins du deuxième signal d'apprentissage (SA2).

2. Procédé de communication selon la revendication 1, comprenant une étape (29') d'émission dudit deuxième signal d'apprentissage (SA2) par ladite entité cible (2) de manière simultanée et synchrone avec un groupe (G1) de noeuds de communication (3) ayant reçu correctement le premier signal d'apprentissage (SA1).

3. Procédé de communication selon la revendication 1 comprenant, en réponse à la réception correcte du premier signal d'apprentissage (SA1), une étape (24) d'envoi d'un message d'information (M2) vers une entité de gestion (12).

4. Procédé de communication selon la revendication 3, dans lequel le message d'information (M2) indique une estimation d'une puissance (Pci) pouvant être atteinte à l'entité cible (2), ladite étape (29) d'émission d'un deuxième signal d'apprentissage (SA2) étant effectuée en réponse à la réception d'un message d'instruction (M3) de l'entité de gestion (12).

5. Procédé de communication selon la revendication 1, comprenant, en réponse à la réception correcte par un terminal (2') dudit signal d'apprentissage intermédiaire (SA1'), une étape (24) d'envoi d'un message d'information (M2') vers une entité de gestion (12).

6. Procédé de communication selon la revendication 5, comprenant une étape d'émission (45) d'un deuxième signal d'apprentissage (SA2) par ledit terminal (2') en réponse à la réception d'un message d'instruction (M3') de l'entité de gestion (12).

7. Noeud de communication (3) destiné à un réseau (1) de télécommunications coopératif, comprenant :
- des moyens d'apprentissage aptes à déterminer un filtre de pré-égalisation (Mi(t)), dit filtre de transmission, en fonction d'un signal d'apprentissage (SA1, SA2) reçu, et
- des moyens (9, 10) de transmission de données vers une entité cible du réseau de manière simultanée et synchrone avec d'autres noeuds dudit réseau, en utilisant ledit filtre de transmission (Mi(t)) déterminé par les moyens d'apprentissage,
**caractérisé en ce que** les moyens d'apprentissage comprennent :
- des moyens (9, 10) d'écoute d'un premier signal d'apprentissage (SA1) provenant de l'entité cible (2) du réseau,
- des moyens (5) de vérification d'une réception correcte du premier signal d'apprentissage (SA1),
- des moyens (5) de détermination du filtre de transmission (Mi(t)) en fonction au moins du premier signal d'apprentissage (SA1), et des moyens d'émission d'un signal d'apprentissage intermédiaire (SA1') ou d'un deuxième signal d'apprentissage (SA2) pré-égalisés par un filtre de pré-égalisation (Fi(t)), dit filtre focalisant, déterminé en fonction du premier signal d'apprentissage (SA1), activés en réponse à la réception correcte du premier signal d'apprentissage (SA1), et
- des moyens (9, 10) d'écoute dudit deuxième signal d'apprentissage (SA2) et des moyens (5) de détermination du filtre de transmission (Mi(t)) en fonction au moins du deuxième signal d'apprentissage (SA2), activés en l'absence de réception correcte du premier signal d'apprentissage et en réponse à la réception correcte dudit deuxième signal d'apprentissage (SA2).

8. Réseau de télécommunications coopératif comprenant une entité cible (2) et une pluralité de noeuds de communication (3) selon la revendication 7, dans lequel les moyens de transmission de données des noeuds de communication (3) sont aptes à transmettre des données vers l'entité cible (2) de manière simultanée et synchrone.

9. Réseau de télécommunications selon la revendication 8 comprenant une entité de gestion (12), dans lequel les noeuds de communication (3) comprennent :
- des moyens (5) d'estimation d'une puissance (Pci) pouvant être atteinte à l'entité cible (2) et des moyens (9, 10) d'envoi d'un message (M2) contenant ladite puissance (Pci) vers l'entité de gestion (12), activés en réponse à la réception correcte du premier signal d'apprentissage (SA1), et
- des moyens (9, 10) d'émission d'un deuxième signal d'apprentissage (SA2), activés en réponse à la réception d'un message d'instruction (M3) de l'entité de gestion (12),
l'entité de gestion (12) comprenant :
- des moyens de réception desdits messages (M2) contenant des puissances (Pci) pouvant être atteintes à l'entité cible (2), émis par un groupe (G1) de noeuds de communication (3) ayant correctement reçu le premier signal d'apprentissage,
- des moyens de test d'une condition d'élargissement (27) en fonction desdites puissances, et
- des moyens d'envoi de messages d'instruction (M3) vers les noeuds de communication (3) dudit groupe (G1), activés lorsque ladite condition d'élargissement est vérifiée.

10. Réseau de télécommunications selon la revendication 8 dans lequel :
- les noeuds de communication (3) comprennent des moyens (9, 10) d'émission d'un deuxième signal d'apprentissage (SA2), activés en réponse à la réception correcte du premier signal d'apprentissage (SA1), et
- l'entité cible (2) comprend des moyens d'émission d'un deuxième signal d'apprentissage (SA2), aptes à envoyer ledit deuxième signal d'apprentissage de manière simultanée et synchrone avec un groupe (G1) de noeuds de communication (3) ayant reçu correctement le premier signal d'apprentissage (SA1).

11. Réseau de télécommunications selon la revendication 8 comprenant en outre au moins un terminal (2'), dans lequel :
- les noeuds de communication (3) comprennent des moyens d'émission d'un signal d'apprentissage intermédiaire (SA1'), activés en réponse à la réception correcte du premier signal d'apprentissage (SA1),
- le terminal (2') comprend des moyens d'écoute du signal d'apprentissage intermédiaire (SA1') et des moyens d'émission d'un deuxième signal d'apprentissage (SA2).

12. Programme d'ordinateur (P1, P2) comportant des instructions pour l'exécution des étapes du procédé selon la revendication 1 lorsque ledit programme est exécuté par un ordinateur.

13. Support d'informations (6) lisible par un ordinateur et comportant des instructions d'un programme d'ordinateur selon la revendication 12.

## Patentansprüche

1. Kommunikationsverfahren, ausgeführt von einem Knoten (3) eines kooperativen Telekommunikationsnetzes (1), das enthält:
- einen Lernschritt, der die Bestimmung eines Vorentzerrungsfilters (Mi(t)), Übertragungsfilter genannt, abhängig von einem empfangenen Lernsignal (SA1, SA2) enthält, und
- einen Schritt (35) der Datenübertragung zu einer Zielentität (2) des Netzes unter Verwendung des während des Lernschritts bestimmten Übertragungsfilters (Mi(t)), gleichzeitig und synchron mit anderen Knoten des Netzes,
**dadurch gekennzeichnet, dass** der Lernschritt enthält:
- einen Schritt (22) des Abhörens eines ersten Lernsignals (SA1), das von der Zielentität (2) des Netzes kommt,
- einen Schritt (23) der Überprüfung eines korrekten Empfangs des erstem Lernsignals (SA1), und
- als Antwort auf den korrekten Empfang des ersten Lernsignals (SA1):
- einen Schritt (35) der Bestimmung des Übertragungsfilters (Mi(t)) abhängig mindestens vom ersten Lernsignal (SA1), und
- einen Schritt (29, 40) des Sendens eines Zwischenlernsignals (SA1') oder eines zweiten Lernsignals (SA2), die durch ein Vorentzerrungsfilter (Fi(t)), fokussierendes Filter genannt, das abhängig vom ersten Lernsignal (SA1) bestimmt wird (24), vorentzerrt werden,
oder
- in Abwesenheit des korrekten Empfangs des ersten Lernsignals (SA1), einen Schritt (30) des Abhörens des zweiten Lernsignals (SA2), und als Antwort auf den korrekten Empfang (31) des zweiten Lernsignals (SA2), einen Schritt (32, 35) der Bestimmung des Übertragungsfilters (Mi(t)) abhängig mindestens vom zweiten Lernsignal (SA2).

2. Kommunikationsverfahren nach Anspruch 1, das einen Schritt (29') des Sendens des zweiten Lernsignals (SA2) durch die Zielentität (2) gleichzeitig und synchron mit einer Gruppe (G1) von Kommunikationsknoten (3) enthält, die das erste Lernsignal (SA1) korrekt empfangen haben.

3. Kommunikationsverfahren nach Anspruch 1, das als Antwort auf den korrekten Empfang des ersten Lernsignals (SA1) einen Schritt (24) des Sendens einer Informationsnachricht (M2) an eine Verwaltungsentität (12) enthält.

4. Kommunikationsverfahren nach Anspruch 3, wobei die Informationsnachricht (M2) eine Schätzung einer Leistung (Pci) anzeigt, die an der Zielentität (2) erreicht werden kann, wobei der Schritt (29) des Sendens eines zweiten Lernsignals (SA2) als Antwort auf den Empfang einer Befehlsnachricht (M3) der Verwaltungsentität (12) ausgeführt wird.

5. Kommunikationsverfahren nach Anspruch 1, das als Antwort auf den korrekten Empfang des Zwischenlernsignals (SA1') durch ein Endgerät (2') einen Schritt (24) des Sendens einer Informationsnachricht (M2') an eine Verwaltungsentität (12) enthält.

6. Kommunikationsverfahren nach Anspruch 5, das einen Schritt (45) des Sendens eines zweiten Lernsignals (SA2) durch das Endgerät (2') als Antwort auf den Empfang einer Befehlsnachricht (M3') der Verwaltungsentität (12) enthält.

7. Kommunikationsknoten (3), bestimmt für ein kooperatives Telekommunikationsnetz (1), der enthält:
- Lerneinrichtungen, die ein Vorentzerrungsfilter (Mi(t)), Übertragungsfilter genannt, abhängig von einem empfangenen Lernsignal (SA1, SA2) bestimmen können, und
- Einrichtungen (9, 10) zur Übertragung von Daten zu einer Zielentität (2) des Netzes gleichzeitig und synchron mit anderen Knoten des Netzes unter Verwendung des von den Lerneinrichtungen bestimmten Übertragungsfilters (Mi(t)),
**dadurch gekennzeichnet, dass** die Lerneinrichtungen enthalten:
- Einrichtungen (9, 10) zum Abhören eines von der Zielentität (2) des Netzes kommenden ersten Lernsignals (SA1),
- Einrichtungen (5) zur Überprüfung eines korrekten Empfangs des ersten Lernsignals (SA1),
- Einrichtungen (5) zur Bestimmung des Übertragungsfilters (Mi(t)) abhängig mindestens vom ersten Lernsignal (SA1), und Einrichtungen zum Senden eines Zwischenlernsignals (SA1') oder eines zweiten Lernsignals (SA2), die von einem Vorentzerrungsfilter (Fi(t)), fokussierendes Filter genannt, das abhängig vom ersten Lernsignal (SA1) bestimmt wird, vorentzerrt werden, die als Antwort auf den korrekten Empfang des ersten Lernsignals (SA1) aktiviert werden, und
- Einrichtungen (9, 10) zum Abhören des zweiten Lernsignals (SA2) und Einrichtungen (5) zur Bestimmung des Übertragungsfilters (Mi(t)) abhängig mindestens vom zweiten Lernsignal (SA2), die in Abwesenheit eines korrekten Empfangs des ersten Lernsignals und als Antwort auf den korrekten Empfang des zweiten Lernsignals (SA2) aktiviert werden.

8. Kooperatives Telekommunikationsnetz, das eine Zielentität (2) und eine Vielzahl von Kommunikationsknoten (3) nach Anspruch 7 enthält, wobei die Einrichtungen zur Übertragung von Daten der Kommunikationsknoten (3) gleichzeitig und synchron Daten zur Zielentität (2) übertragen können.

9. Telekommunikationsnetz nach Anspruch 8, das eine Verwaltungsentität (12) enthält, wobei die Kommunikationsknoten (3) enthalten:
- Einrichtungen (5) zum Schätzen einer Leistung (Pci), die an der Zielentität (2) erreicht werden kann, und Einrichtungen (9, 10) zum Senden einer die Leistung (Pci) enthaltenden Nachricht (M2) an die Verwaltungsentität (12), die als Antwort auf den korrekten Empfang des ersten Lernsignals (SA1) aktiviert werden, und
- Einrichtungen (9, 10) zum Senden eines zweiten Lernsignals (SA2), die als Antwort auf den Empfang einer Befehlsnachricht (M3) der Verwaltungsentität (12) aktiviert werden,
wobei die Verwaltungsentität (12) enthält:
- Einrichtungen zum Empfang der Nachrichten (M2), die Leistungen (Pci) enthalten, die an der Zielentität (2) erreicht werden können, gesendet von einer Gruppe (G1) von Kommunikationsknoten (3), die das erste Lernsignal korrekt empfangen haben,
- Einrichtungen zum Test einer Erweiterungsbedingung (27) abhängig von den Leistungen, und
- Einrichtungen zum Senden von Befehlsnachrichten (M3) an die Kommunikationsknoten (3) der Gruppe (G1), die aktiviert werden, wenn die Erweiterungsbedingung erfüllt ist.

10. Telekommunikationsnetz nach Anspruch 8, wobei:
- die Kommunikationsknoten (3) Einrichtungen (9, 10) zum Senden eines zweiten Lernsignals (SA2) enthalten, die als Antwort auf den korrekten Empfang des ersten Lernsignals (SA1) aktiviert werden, und
- die Zielentität (2) Einrichtungen zum Senden eines zweiten Lernsignals (SA2) enthält, die das zweite Lernsignal gleichzeitig und synchron mit einer Gruppe (G1) von Kommunikationsknoten (3) senden können, die das erste Lernsignal (SA1) korrekt empfangen haben.

11. Telekommunikationsnetz nach Anspruch 8, das außerdem mindestens ein Endgerät (2') enthält, wobei:
- die Kommunikationsknoten (3) Einrichtungen zum Senden eines Zwischenlernsignals (SA1') enthalten, die als Antwort auf den korrekten Empfang des ersten Lernsignals (SA1) aktiviert werden,
- das Endgerät (2') Einrichtungen zum Abhören des Zwischenlernsignals (SA1') und Einrichtungen zum Senden eines zweiten Lernsignals (SA2) enthält.

12. Computerprogramm (P1, P2), das Befehle zur Ausführung der Schritte des Verfahrens nach Anspruch 1 aufweist, wenn das Programm von einem Computer ausgeführt wird.

13. Computerlesbarer Datenträger (6), der Befehle eines Computerprogramms nach Anspruch 12 aufweist.

## Claims

1. Communication method executed by a node (3) of a cooperative telecommunications network (1), comprising:
- a learning step, including determining a pre-equalization filter (Mi(t)), termed transmission filter, on the basis of a received learning signal (SA1, SA2), and
- a step (35) of transmitting data to a target entity (2) of the network, using said transmission filter (Mi(t)) determined during the learning step, simultaneously and synchronously with other nodes of said network,
**characterized in that** the learning step comprises:
- a step (22) of listening to a first learning signal (SA1) coming from the target entity (2) of the network,
- a step (23) of verifying correct reception of the first learning signal (SA1), and
- in response to the correct reception of the first learning signal (SA1):
- a step (35) of determining the transmission filter (Mi(t)) on the basis at least of the first learning signal (SA1), and
- a step (29, 40) of transmitting an intermediate learning signal (SA1') or a second learning signal (SA2) that are pre-equalized by a pre-equalization filter (Fi(t)), termed focussing filter, determined (24) on the basis of the first learning signal (SA1), or
- in the absence of correct reception of the first learning signal (SA1), a step (30) of listening to said second learning signal (SA2) and, in response to the correct reception (31) of said second learning signal (SA2), a step (32, 35) of determining the transmission filter (Mi(t)) on the basis at least of the second learning signal (SA2).

2. Communication method according to Claim 1, comprising a step (29') of transmission of said second learning signal (SA2) by said target entity (2) simultaneously and synchronously with a group (G1) of communication nodes (3) that has correctly received the first learning signal (SA1).

3. Communication method according to Claim 1, comprising, in response to the correct reception of the first learning signal (SA1), a step (24) of sending an information message (M2) to a management entity (12).

4. Communication method according to Claim 3, wherein the information message (M2) indicates an estimation of a power (Pci) able to be achieved at the target entity (2), said step (29) of transmitting a second learning signal (SA2) being carried out in response to the reception of an instruction message (M3) from the management entity (12).

5. Communication method according to Claim 1, comprising, in response to the correct reception, by a terminal (2'), of said intermediate learning signal (SA1'), a step (24) of sending an information message (M2') to a management entity (12).

6. Communication method according to Claim 5, comprising a step (45) of transmission of a second learning signal (SA2) by said terminal (2') in response to the reception of an instruction message (M3') from the management entity (12).

7. Communication node (3) intended for a cooperative telecommunications network (1), comprising:
- learning means able to determine a pre-equalization filter (Mi(t)), termed transmission filter, on the basis of a received learning signal (SA1, SA2), and
- means (9, 10) for transmitting data to a target entity (2) of the network, simultaneously and synchronously with other nodes of said network, using said transmission filter (Mi(t)) determined by the learning means,
**characterized in that** the learning means comprise:
- means (9, 10) for listening to a first learning signal (SA1) coming from the target entity (2) of the network,
- means (5) for verifying correct reception of the first learning signal (SA1),
- means (5) for determining the transmission filter (Mi(t)) on the basis at least of the first learning signal (SA1), and means for transmitting an intermediate learning signal (SA1') or a second learning signal (SA2) that are pre-equalized by a pre-equalization filter (Fi(t)), termed focussing filter, determined on the basis of the first learning signal (SA1), which means are activated in response to the correct reception of the first learning signal (SA1), and
- means (9, 10) for listening to said second learning signal (SA2) and means (5) for determining the transmission filter (Mi(t)) on the basis at least of the second learning signal (SA2), which means are activated in the absence of correct reception of the first learning signal and in response to the correct reception of said second learning signal (SA2).

8. Cooperative telecommunications network comprising a target entity (2) and a plurality of communication nodes (3) according to Claim 7, wherein the data transmission means of the communication nodes (3) are able to transmit data to the target entity (2) simultaneously and synchronously.

9. Telecommunications network according to Claim 8, comprising a management entity (12), wherein the communication nodes (3) comprise:
- means (5) for estimating a power (Pci) able to be achieved at the target entity (2) and means (9, 10) for sending a message (M2) containing said power (Pci) to the management entity (12), which means are activated in response to the correct reception of the first learning signal (SA1), and
- means (9, 10) for transmitting a second learning signal (SA2), which means are activated in response to the reception of an instruction message (M3) from the management entity (12),
the management entity (12) comprising:
- means for receiving said messages (M2) containing powers (Pci) able to be achieved at the target entity (2), transmitted by a group (G1) of communication nodes (3) that has correctly received the first learning signal,
- means for testing an expansion condition (27) on the basis of said powers, and
- means for sending instruction messages (M3) to the communication nodes (3) of said group (G1), which means are activated when said expansion condition is verified.

10. Telecommunications network according to Claim 8, wherein:
- the communication nodes (3) comprise means (9, 10) for transmitting a second learning signal (SA2), which means are activated in response to the correct reception of the first learning signal (SA1), and
- the target entity (2) comprises means for transmitting a second learning signal (SA2), which means are able to send said second learning signal simultaneously and synchronously with a group (G1) of communication nodes (3) that has correctly received the first learning signal (SA1).

11. Telecommunications network according to Claim 8, furthermore comprising at least one terminal (2'), wherein:
- the communication nodes (3) comprise means for transmitting an intermediate learning signal (SA1'), which means are activated in response to the correct reception of the first learning signal (SA1),
- the terminal (2') comprises means for listening to the intermediate learning signal (SA1') and means for transmitting a second learning signal (SA2).

12. Computer program (P1, P2) including instructions for executing the steps of the method according to Claim 1 when said program is executed by a computer.

13. Computer-readable information medium (6) including instructions of a computer program according to Claim 12.
